# EUROPÄISCHE PATENTANMELDUNG

(11) **EP 0 826 839 A1**
(43) Veröffentlichungstag der Anmeldung: **04.03.1998**
(21) Anmeldenummer: 96112262.9
(22) Anmeldetag: 30.07.1996
(51) Int. Cl.: E03F 5/14

(54) **Verfahren zum Abscheiden von in Abwässern mitgeführten festen Inhaltsstoffen**

(71) Anmelder: PASSAVANT-WERKE AG, 65322 Aarbergen 7 (DE)
(72) Erfinder: Wetten, Heinz-Josef, 65589 Hadamar (DE)

(57) **Zusammenfassung**

Die Erfindung betrifft die Abscheidung von Feststoffen aus mit diesen Stoffen befrachteten Abwässern. Bei dem neuen Verfahren zur Abtrennung der Feststoffe wird in der dem Zulauf (5) nachgeordneten Grobabscheidestufe eine in den Wasserspiegel eingehängte Filtereinrichtung verwendet. Die vorzugsweise als Filterbeutel (12) ausgebildete Filtereinrichtung ist vorzugsweise an einer heb- und schwenkbaren Halteeinrichtung (13,14,15) aufgehängt. Der Filterbeutel (12) wird vor der Entnahme über Wasser gehoben und dort abtropfen gelassen. Während dieser Zeit wird ein zweiter Filterbeutel (12') an einer zweiten Halteeinrichtung (13',14',15') in die Abscheidestellung gebracht und gehalten. Führungs, Hub- und Dreheinrichtungen sowie Anschläge und Arretierungen für die Halteeinrichtungen sind vorgesehen.

## Beschreibung

Die Erfindung bezieht sich auf ein Verfahren nach dem Oberbegriff von Anspruch 1.

Die Abscheidung von festen Abwasserinhaltsstoffen geschieht üblicherweise durch Absetzenlassen in einem beruhigt und im wesentlichen horizontal durchströmten Abscheidebehälter oder -becken, in dem die Feststoffe Zeit haben, sich am Boden abzusetzen. Von dort werden sie in vorgeschriebenen Zeitabständen abgezogen, z.B. durch Absaugen mit einem an einem Entsorgungsfahrzeug vorhandenen Saugschlauch.

Mit den absetzfähigen Feststoffen wird in der Regel auch eine große Menge Wasser abgezogen. Das läßt sich bei dieser Methode nicht vermeiden. Es wurde deshalb in jüngster Vergangenheit nach einer anderen Methode zur Entnahme der Sinkstoffe gesucht. Diese neue Methode besteht darin, dem Zulauf in das Abscheidebecken eine Vorabscheidestufe in Form eines Auffanggefäßes vorzuordnen (DE-U 88 14 314). In diesem ebenfalls beruhigt durchströmten Auffanggefäß können sich die Feststoffe am Boden sammeln und dann mit dem Gefäß entsorgt werden. Es ist jedoch nicht sichergestellt, daß der Wasserinhalt des Auffanggefäßes vorher abgelassen wird. Der Wasserinhalt wird also meist mitentsorgt. Das erhöht die Entsorgungskosten erheblich. Außerdem haben die Sinkstoffe, wenn der Wasserteil vorher tatsächlich entfernt wurde, noch einen großen Feuchtegehalt, der bei der Wiederaufarbeitung der entsorgten Feststoffe stört.

Die Aufgabe, hier für wirksame Abhilfe zu sorgen, wird nunmehr erfindungsgemäß durch die in Anspruch 1 enthaltenen Merkmale gelöst. Dadurch, daß die die Grobabscheidestufe bildende Auffangeinrichtung als wasserdurchlässige Filtereinrichtung ausgebildet ist, kann der Wasserinhalt der Auffangeinrichtung nach dem Ausheben selbsttätig ablaufen. Läßt man die Filtereinrichtung vor dem Entnehmen noch eine Zeit im Abscheider hängen, dann werden die Feststoffe auch hochgradig entwässert. Das Filtratwasser läuft in den Abscheider und braucht nicht mitentsorgt zu werden.

Vorzugsweise ist die Filtereinrichtung als Filterbeutel ausgebildet, der in einer entsprechenden Halteeinrichtung aufgehängt wird. Es ist zweckmäßig, zwei Filterbeutel und zwei Aufhängevorrichtungen vorzusehen, die abwechselnd unter den Zulauf geschwenkt werden können. Der ausgehobene Filterbeutel kann praktisch bis zum Austausch entwässern und wird dann erst entsorgt.

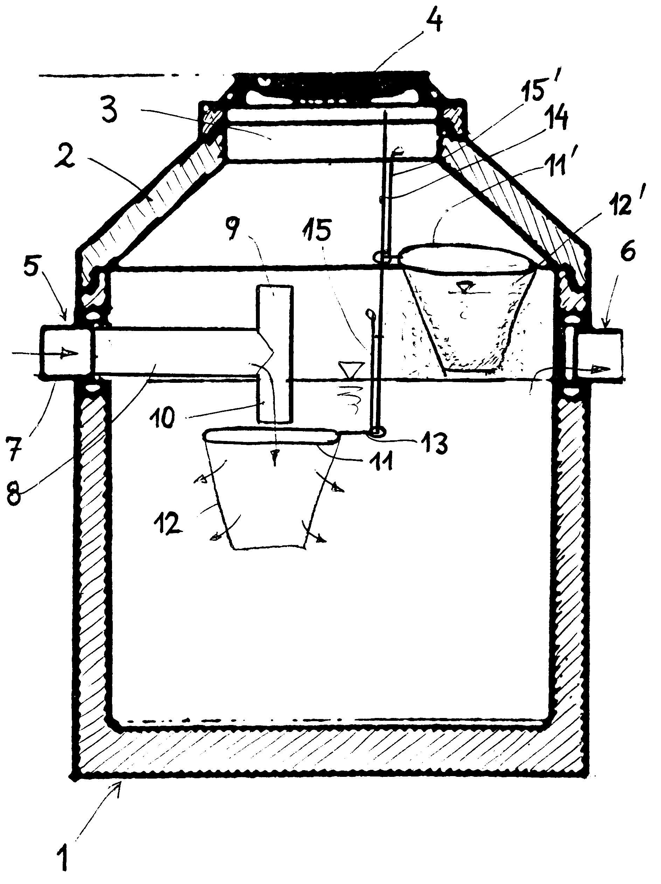

Die Zeichnung zeigt eine bevorzugte Ausführung der Erfindung im Achsschnitt durch einen als Hohlzylinder ausgebildeten Abscheiders 1.

Das aus Stahlbeton bestehende, nach Vorschrift innenbeschichtete Abscheidegefäß ist oben mit einem Konusdeckel 2 zu einer Wartungsöffnung 3 verengt, die durch eine handelsübliche Schachtabdeckung 4 verschlossen ist. Zu- und Ablauf 5, 6 liegen sich diametral gegenüber. An den Zulaufstutzen 7 ist ein T-förmiges Zulaufrohr 8 angeschlossen, dessen nach oben gerichteter Arm 9 der Luftzufuhr in die Zulaufleitung dient.

Der untere Arm 10 mündet in einen an einer Halterung 11 aufgehängten Filterbeutel 12. Der Filterbeutel kann, da er in den Abscheiderinhalt eingetaucht ist, zur vollen Entfaltung eine Beschwerung und/oder ein Aufspanngestell erhalten.

Die vorzugsweise ringförmige Halterung 11 besitzt einen Haltearm 13, mit dem sie an einer Vertikalführung 14 aufgehängt ist. An der Vertikalführung ist ferner eine Zieh- und Drehstange 15 gelagert, mit der der Filterbeutel herausgehoben, geschwenkt und abgesenkt werden kann. Gegenüber von dem Filterbeutel ist eine zweite Halterung 11' mit Zieh- und Drehstange 15' für einen zweiten Filterbeutel 12' vorgesehen. Die beiden Zieh- und Drehstangen 15, 15' sind vorzugsweise durch Ringschellen od. dgl. in einer 180°-Stellung zueinander fixiert, so daß der zum Entwässern ausgehobene Filterbeutel sich über dem Hauptabscheidebereich befindet. Für die Drehungen und die Vertikalbewegungen der beiden Stangen sind Anschläge zweckmäßig, um die vorgesehenen Stellungen zu erreichen. In der angehobenen Stellung kann die Halterung eingerastet oder sonstwie arretiert werden.

Bei Inbetriebnahme des Abscheiders sind in beide Halterungen je ein Filterbeutel eingehängt. Der eine befindet sich eingetaucht unter dem Zulauf, der andere leer über dem Abwasserspiegel. Das mit Sinkstoffen verschmutzte, zulaufende Abwasser muß den Filterbeutel von innen nach außen durchströmen. Dabei setzen sich die Sinkstoffe auf der Innenseite des Filterbeutels ab und bilden eine Schicht, deren Durchflußwiderstand allmählich steigt. Um die Abscheidung der Sinkstoffe zu gewährleisten, ist deshalb ein Austausch des Filterbeutels gegen einen sauberen notwendig. Der gefüllte Filterbeutel wird um mindestens 90° weggeschwenkt und dann aus dem Abscheiderinhalt herausgezogen. Jetzt wird der zweite Filterbeutel bis unter den Zulaufarm abgesenkt und durch anschließendes Schwenken unter diesem positioniert. Der ausgehobene Filterbeutel bleibt noch eine Zeitlang im Abscheidebecken hängen und kann dabei abtropfen.

Wenn die Sinkstoffe genügend entwässert sind, wird der Filterbeutel samt Inhalt aus dem geöffneten Abscheider entnommen. Hierzu wird die Halterung nochmals um etwa 180° verschwenkt, so daß der Filterbeutel sich in der Wartungsöffnung befindet. Nach der Entnahme des mit Feststoffen teilweise gefüllten Filterbeutels wird ein sauberer Filterbeutel eingehängt und die Halterung wieder in die Wartestellung gebracht.

In Abwandlung der hier gezeigten Ausführungsform kann die Vertikalführung ein teleskopartig nach oben herausziehbares Oberteil erhalten. Damit ist es möglich, die Filterbeutel über Flur aus- und einzuhängen und zu begutachten.

Die Filterbeutel können andere Form und/oder andere Größe als die dargestellten haben. Ihre Oberkante kann am oder sogar über dem Betriebswasserspiegel liegen, so daß es zu keiner Kurzschlußströmung über die Oberkante des Filterbeutels kommen kann.

Bei Abscheidern, die in eine Sinkstoff- und eine Schwimmstoffkammer unterteilt sind, werden die Filterbeutel in der Sinkstoffkammer untergebracht und durch die dort vorgesehene Wartungsöffnung entsorgt.

Abwässer, die sowohl mit Sink- als auch mit Schwimmstoffen befrachtet sind, enthalten meist auch sog. Ölschlämme, deren spezifische Dichte nahe bei 1,0 liegt. Diese Schlämme sind deshalb in einem Kombiabscheider nicht abtrennbar. In dem hier vorgestellten Abscheider werden diese Stoffe in der als Filterbeutel ausgebildeten Vorabscheidestufe zurückgehalten und können mit dem Filterbeutel ordnungsgemäß entsorgt werden.

## Patentansprüche

1. Verfahren zum Abscheiden von in Abwässern mitgeführten sedimentierbaren Inhaltsstoffen in einem im wesentlichen horizontal und beruhigt durchströmten Abscheidebehälter oder -becken, wobei der dem Zulauf vorgeordnete Bereich als gegen die übrigen Bereiche getrennte Vorabscheidestufe ausgebildet ist, aus der die vorabgeschiedenen Trennstoffe nach oben entnommen werden können, **da durch gekennzeichnet**, daß in der Vorabscheidestufe eine wasserdurchlässige, als Filterbehälter ausgebildete Auffangeinrichtung vorgesehen ist, die in vorgegebenen Zeitabständen oder bei einem bestimmten Füllgrad aus dem Abscheiderinhalt herausgehoben, im Abscheidebehälter abtropfen und entwässern gelassen und danach entsorgt wird.

2. Verfahren nach Anspruch 1, **dadurch gekennzeichnet**, daß für die ausgehobene Auffangeinrichtung eine zweite Auffangeinrichtung unter den Zulauf geschwenkt wird und daß die beiden Auffangeinrichtungen abwechselnd in die beiden Arbeitsstellungen bewegt werden.

3. Verfahren nach Anspruch 1 oder 2, **dadurch gekennzeichnet**, daß die Auffangeinrichtungen als Filterbeutel ausgebildet sind.

4. Verfahren nach Anspruch 3, **dadurch gekennzeichnet**, daß zwei Haltevorrichtungen für Filterbeutel vorgesehen sind, die abwechselnd in die beiden Arbeitsstellungen der Filterbeutel bewegbar sind.

5. Verfahren nach Anspruch 3 oder 4, **dadurch gekennzeichnet**, daß die Filterbeutel aus abbaubarem Material bestehen und mit dem Inhalt entsorgt werden.
